Europäisches Patentamt

European Patent Office

Office européen des brevets

(11) Veröffentlichungsnummer: **0 307 656**
**A2**

(12) **EUROPÄISCHE PATENTANMELDUNG**

(21) Anmeldenummer: 88113556.0

(22) Anmeldetag: 20.08.88

(51) Int. Cl.⁴: **F01N 3/02** , **B03C 3/00**

(30) Priorität: 16.09.87 DE 3731110

(43) Veröffentlichungstag der Anmeldung:
22.03.89 Patentblatt 89/12

(84) Benannte Vertragsstaaten:
CH DE FR GB IT LI SE

(71) Anmelder: ROBERT BOSCH GMBH
Postfach 10 60 50
D-7000 Stuttgart 10(DE)

(72) Erfinder: Leonhard, Rolf, Dr.
Breslauer Strasse 29
D-7141 Schwieberdingen(DE)
Erfinder: Lucas, Bernhard, Dipl.-Ing.
Eichendorffstrasse 2/4
D-7257 Ditzingen(DE)

(54) Koagulator für eine Abgasreinigungsanlage von Brennkraftmaschinen.

(57) Ein Koagulator für eine Abgasreinigungsanlage von Brennkraftmaschinen weist zur Erzeugung eines elektrostatischen Feldes eine in einem Gehäuse (10) isoliert hindurchgeführte Elektrode (11) auf. Die Elektrode (11) ist dabei über mindestens einen Isolator (13) am Gehäuse (10) abgestützt. Zur Verhinderung der Ausbildung einer Kurzschlußbrücke zwischen Elektrode (11) und Gehäuse (10) durch Niederschlag von sog. Agglomeraten auf der Isolatoroberfläche wird der Isolator (13) auf eine Oberflächentemperatur von über 400°C aufgeheizt. Zwecks Erzielung einer extrem kleinen Bauweise des Isolators (13) und eines geringen Energiebedarfs für dessen Beheizung ist der Isolator (13) scheibenförmig ausgebildet und besitzt einen im Innern spiralförmig angeordneten Heizkanal (30), der von heißen Gasen durchströmt wird. Letztere werden aus einem Teilstrom des Abgases der Brennkraftmaschine abgezweigt oder dem Abgas eines Rußbrenners entnommen.

Fig.1

## Koagulator für eine Abgasreinigungsanlage von Brennkraftmaschinen

Stand der Technik

Die Erfindung betrifft einen Koagulator für eine Abgasreinigungsanlage von Brennkraftmaschinen, insbesondere von Diesel-Brennkraftmaschinen, der im Oberbegriff des Anspruchs 1 definierten Gattung.

Bei solchen Koagulatoren, auch Agglomeratoren oder elektrostatische Rußabscheider genannt, werden die im Abgas der Brennkraftmaschine enthaltenen Partikel, z.B. Rußteilchen, in dem zwischen der Elektrode und dem als Gegenelektrode gepolten Gehäuse sich ausbildenden elektrostatischen Feld, ionisiert. Hierbei heften sich den Partikeln elektrische Ladungen an, so daß die Partikel koagulieren, d.h. sich gegenseitig anziehen und zu größeren Agglomeraten zusammenschließen, welche in nachgeschalteten Fliehkraftabscheidern (Zyklone) der Abgasreinigungsanlage leichter abgeschieden werden können. Liegt die Feldstärke des elektrostatischen Feldes zwischen Elektrode und Gehäuse unterhalb der Ionisationsfeldstärke der Partikel, so findet ebenfalls eine Koagulation der kleinen Partikel aufgrund von Ladungsverschiebungen statt. Da keine Energie für Ionisationsvorgänge verbraucht wird, arbeitet ein solcher Koagulator mit geringstmöglichen Verbrauch an elektrischer Energie.

Ein Teil der so gebildeten Agglomerate schlägt sich bereits im Koagulator nieder. Mit der Zeit treten dabei auch auf dem die isolierte Durchführung der Elektrode durch das Gehäuse sicherstellenden Isolator Beläge aus elektrisch leitfähigen Agglomeraten auf, die zum Kurzschluß des Isolators und damit zum Ausfall des Koagulators führen würden. Um dies zu vermeiden, wird die Oberfläche des Isolators ständig auf eine Temperatur von über 400° C aufgeheizt. Bei dieser Temperatur wird die Ablagerung von Agglomeraten auf dem Isolator unterbunden. Ein Agglomeratniederschlag, der sich nach Abschalten der Abgasreinigungsanlage gebildet hat, kann durch Aufheizen des Isolators auf über 600° C abgebrannt, d.h. oxidiert werden.

Bei einem bekannten Koagulator der eingangs genannten Art (DE-PS 33 05 601) weist der zylinderförmig ausgebildete, stufig abgesetzte Isolator einen an der im Gehäuseinnern des Koagulators liegenden Austrittsstelle der Elektrode aus dem Isolator in Axialrichtung vorspringenden Ringabschnitt auf, auf welchem eine Glühzone angeordnet ist. Die Glühzone wird von einem elektrischen Widerstandsdraht gebildet, der sich als Dickschichtheizleiterbahn wendelförmig über den Umfang des Ringabschnittes erstreckt. Ein Nachteil dieses bekannten Isolators ist seine relativ große Baulänge, sowie die Tatsache, daß er einen zusätzlichen Stromverbraucher darstellt, der im Gegensatz zu dem Leistungsbedarf des Koagulators beträchtlich ist.

Vorteile der Erfindung

Der erfindungsgemäße Koagulator mit den kennzeichnenden Merkmalen des Anspruchs 1 hat demgegenüber den Vorteil, daß der Isolator eine extrem geringe Baulänge in axialer Richtung aufweist, was sich günstig auf die Einbaumaße des Koagulators auswirkt. Durch das relativ kleine Verhältnis von axialer Baulänge zum Durchmesser des Isolators läßt sich eine günstige Fertigung erzielen. Durch die Nutzung von an der Brennkraftmaschine anfallender Abwärme ist der erforderliche Energieeinsatz praktisch Null.

Durch die in den weiteren Ansprüchen aufgeführten Maßnahmen sind vorteilhafte Weiterbildungen und Verbesserungen des im Anspruch 1 angegebenen Koagulators möglich.

Durch die Zweiteiligkeit der Isolatorscheibe, die aus einem Grundkörper und aus mindestens einer auf diesen aufsinterbaren Deckplatte besteht, läßt sich in fertigungstechnisch einfacher Weise der Heizkanal zur Beheizung des Isolators als Nut einbringen. Die am Nutausgang austretenden Gase können entweder in das Innere des Koagulatorgehäuses eingeleitet werden oder - wenn sie genügend gereinigt sind, wie dies z.B. bei der Abnahme der heißen Gase vom Rußbrenner der Abgasreinigungsanlage der Fall ist - direkt ins Freie austreten.

Bei beidseitiger Beaufschlagung des Isolators mit Abgasen, wie dies bei Koagulatoren mit axialer Durchströmung auftritt, ist es von Vorteil, einen zweiten Heizkanal vorzusehen, damit auch die andere Seitenfläche der Isolatorscheibe gleich gut beheizt werden kann.

Zur Vermeidung von Wärmeverlusten ist die außenliegende Fläche der Isolatorscheibe mit einer Wärmedämmung versehen. Zweckmäßigerweise sind auch Dichtungen an den Verbindungsstellen von Isolatorscheibe einerseits und Gehäuse und Elektrode andererseits wärmedämmend ausgebildet.

Zeichnung

Die Erfindung ist anhand von in der Zeichnung dargestellten Ausführungsbeispielen in der nachfolgenden Beschreibung näher erläutert. Es zeigen:

Fig. 1 ausschnittweise einen Längsschnitt eines Koagulators für eine Abgasreinigungsanlage,

Fig. 2 einen Schnitt längs der Linie II-II in Fig. 1,

Fig. 3 eine gleiche Darstellung des Koagulators wie in Fig. 1 gemäß einem weiteren Ausführungsbeispiel.

Beschreibung der Ausführungsbeispiele

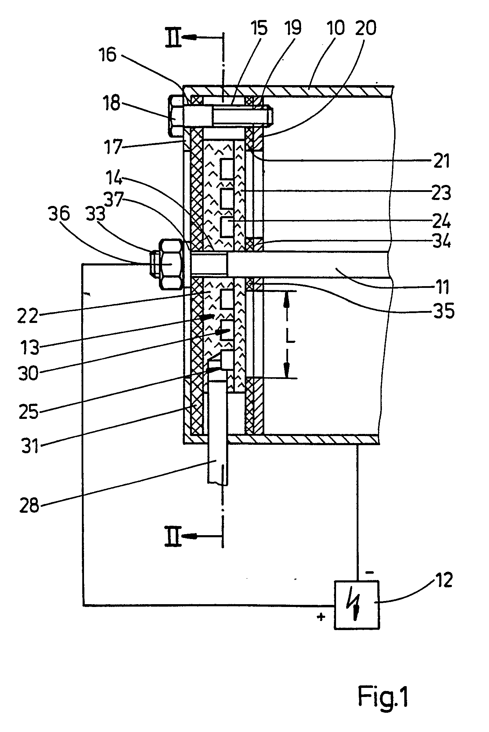

Der in Fig. 1 im Längsschnitt ausschnittweise zu sehende Koagulator weist ein zylindrisches Gehäuse 10 und eine im Gehäuse 10 konzentrisch angeordnete Elektrode 11 auf. Die Elektrode 11 ist an den positiven Pol einer Hochspannungsquelle 12 gelegt, während das Gehäuse 10 geerdet ist und damit die Gegenelektrode bildet. Eine umgekehrte Polung ist möglich. Die Elektrode 11 ist mittels zweier Isolatoren 13 im Gehäuse 10 isoliert gehalten und geführt. In Fig. 1 ist nur der linke Teil des Koagulators dargestellt und damit nur ein Isolator 13 zu sehen. Der Koagulator ist aber spiegelsymmetrisch aufgebaut, so daß die Elektrode 11 an beiden Enden in gleicher Weise in jeweils einem Isolator 13 gehalten ist. Es ist auch möglich, die Elektrode 11 als Kragarmelektrode auszubilden, die dann einseitig von nur einem Isolator 13 gehalten wird.

Der Isolator 13 ist scheibenförmig mit einer zum Durchmesser relativ kleinen axialen Länge ausgebildet. Er nimmt in einer zentralen Axialdurchführung 14 die Elektrode 11 auf und ist randseitig mit dem Gehäuse 10 verbunden. Hier trägt die Isolatorscheibe 13 axiale Durchtrittsöffnungen 15, die über den Umfang gleichmäßig verteilt angeordnet sind und mit gleichartigen Durchtrittsöffnungen 16 in einem vom Gehäuse 10 radial nach innen wegstehenden, mit dem Gehäuse 10 einstückigen Ringsteg 17 fluchten. Durch die gepaarten Durchtrittsöffnungen 16 und 17 sind Kopfschrauben 18 hindurchgesteckt und in Gewindelöchern 19 verschraubt, die in einem Haltering 20 eingebracht sind, der auf der dem Innern des Gehäuses 10 zugekehrten Oberfläche der Isolatorscheibe 13 plan aufliegt. Die radiale Breite des Halterings 20 ist so gewählt, daß zwischen seinem inneren Rand und der Elektrode 11 eine freie Überschlagslänge L verbleibt. Letztere richtet sich nach der Höhe der zu isolierenden Hochspannung. Zwischen dem Haltering 20 und der Oberfläche der Isolatorscheibe 13 ist eine wärmedämmende Ringdichtung 21 eingelegt.

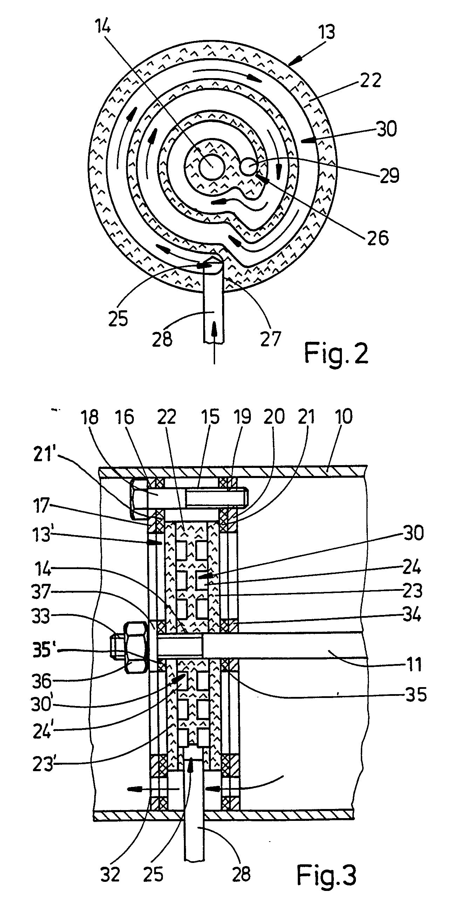

Die Isolatorscheibe 13 besteht aus zwei Keramikteilen, und zwar einem Grundkörper 22 und einer Deckplatte 23 mit wesentlich geringerer axialer Dicke, die in Sandwichtechnik aufeinandergesintert sind. In die der Deckplatte 23 zugekehrten Seitenfläche des Grundkörpers 22 ist eine Nut 24 spiralförmig eingebracht (Fig. 2), die eingangsseitig in einer Einströmöffnung 25 und ausgangsseitig in einer Ausströmöffnung 26 mündet. Die Einströmöffnung 25 ist als eine im Grundkörper 22 radial eingebrachte Bohrung 27 realisiert in welcher noch ein Einlaßrohr 28 eingeschoben ist, während die Ausströmöffnung 26 als Axialbohrung 29 ausgeführt ist. Die Axialbohrung 29 kann dabei entweder ausschließlich im Grundkörper 22 verlaufen und an der von der Deckplate 23 abgekehrten Seitenfläche des Grundkörpers 22 axial austreten oder aber zusätzlich durch die Deckplatte 23 hindurchgeführt sein und im Innern des Gehäuses 10 münden. Die Nut 24 bildet nach Aufsintern der Deckplatte 23 auf den Grundkörper 23 einen geschlossenen Heizkanal 30, der mit heißen Gasen beschickt wird und die Deckplatte 23 beheizt. Dabei wird eine Temperatur auf der freien Oberfläche der Deckplatte 23 erreicht, die oberhalb von 400°C liegt. Zur Beschickung des Heizkanals 30 wird der Abgasstrom der Brennkraftmaschine verwandt. Dabei wird beispielsweise ein Teilstrom des Abgases möglichst nahe an der Brennkraftmaschine abgezweigt und über das Einlaßrohr 28 in die Nut 24 eingeleitet. In diesem Fall mündet die Axialbohrung 29 der Ausströmöffnung 26 im Innern des Gehäuses 10, so daß das ungereinigte Abgas ebenfalls der Reinigungsanlage zugeführt wird. Bei Abgasreinigungsanlagen mit sog. Rußbrennern, die zur Rußentsorgung vorgesehen sind, kann auch das Abgas des Rußbrenners, welches eine ausreichende Restenergie enthält, dem Heizkanal 30 zugeführt werden. Da das Abgas des Rußbrenners weitgehend schadstoffrei ist, kann in diesem Fall das aus dem Heizkanal 30 austretende Abgas unmittelbar ins Freie strömen. In diesem Fall wird die Axialbohrung 29 der Ausströmöffnung 26 auf der von der Deckplatte 23 abgekehrten Außenfläche des Grundkörpers 22 münden.

Zur Vermeidung von Wärmeverlusten ist die von der Deckplatte 23 abgekehrte, außenliegende Oberfläche des Grundkörpers 22 mit einer Wärmedämmung 31 belegt. Zur gasdichten Abdichtung der Elektrode 11 in der Axialdurchführung 14 trägt die Elektrode 11 endseitig einen Gewindeabschnitt 33 und im Abstand davon eine radial wegstehende Ringschulter, die beispielsweise durch eine auf die Elektrode 11 aufgeschweißte Ringscheibe 34 realisiert ist. Nach Auflegen einer wärmedämmenden Ringflachdichtung 35 auf die Ringscheibe 34 wird die Elektrode 11 durch die Axialdurchfürung 14 hindurchgesteckt und mittels einer auf den Gewindeabschnitt 33 aufgeschraubten Mutter 36 an der Isolatorscheibe 13 zwischen Ringscheibe 34 und Mutter 36 mit Unterlegscheibe 37 verspannt.

Die den Heizkanal 30 durchströmenden heißen Gase erhitzen die Deckplatte 23, so daß während des Betriebs des Koagulators eine Rußbelegung der Oberfläche der Isolatorscheibe 13 zwischen Elektrode 11 und Haltering 20 nicht auftritt und damit die erforderliche Überschlagslänge L erhalten bleibt. Der Querschnitt und die Anordnung der den Heizkanal 30 bildende Nut 24 ist dabei entsprechend der Eintrittstemperatur und dem zeitlichen Massenstrom der zugeführten Heizgase so gewählt, daß die zur Verhinderung der Belegung erforderliche Temperatur von ca. 400°C erreicht wird. Will man zusätzlich eine Oxidation vorhandener Rußschichten auf der Oberfläche der Isolatorscheibe 13 erreichen, ist eine Temperatur von ca. 600°C einzuhalten.

Das in Fig. 3 im Längsschnitt ausschnittweise dargestellte weitere Ausführungsbeispiel eines Koagulators kommt in solchen Fällen zum Einsatz, in denen mit beidseitiger Beaufschlagung des Isolators mit rußbeladenem Abgas zu rechnen ist. Dies tritt Z.B. bei axialer Durchströmung des Koagulators auf, wie dies durch die Pfeile 32 in Fig. 3 angedeutet ist. Der Grundkörper 22 trägt nunmehr auf jeder Seite eine Spiralnut 24 bzw. 24′, die jeweils von einer aufgesinterten Deckplatte 23 bzw. 23′ abgedeckt ist, so daß zwei Heizkanäle 30 bzw. 30′ für jede Deckplatte 23 bzw. 23′ entstehen. Die Heizkanäle 30 bzw. 30′ haben eine gemeinsame Einströmöffnung 25, die wiederum von dem Einlaßrohr 28 gebildet wird. Auch die hier nicht zu sehenden Ausströmöffnungen der Nuten 24,24′ können über eine gemeinsame Axialbohrung 29 ins Gehäuseinnere geleitet werden. Selbstverständlich entfällt hier die Wärmedämmung 31, da beide Seiten der Isolatorscheibe 13′ beheizt werden. Im übrigen stimmt der Aufbau des Koagulators in Fig. 3 mit dem in Fig. 1 überein, so daß gleiche Bauteile mit gleichen Bezugszeichen versehen sind.

**Ansprüche**

1. Koagulator für eine Abgasreinigungsanlage von Brennkraftmaschinen, insbesondere von Diesel-Brennkraftmaschinen, mit einem als Gegenelektrode gepolten, insbesondere zylindrischen Gehäuse, einer im Gehäuse konzentrisch angeordneten Elektrode und mindestens einem die Elektrode auf einem Längsabschnitt umgebenden Isolator zur isolierten Durchführung der Elektrode durch das Gehäuse, der zur Verhinderung einer durch Agglomeratniederschlag sich ausbildenden Kurzschlußbrücke beheizt ist, dadurch gekennzeichnet, daß der Isolator (13;13′) scheibenförmig mit einer Axialdurchführung (14) für die Elektrode (11) ausgebildet und randseitig mit dem Gehäuse (10) verbunden ist und daß im Innern der Isolatorscheibe (13;13′) mindestens ein von heißen Gasen durchströmter Heizkanal (30;30′), vorzugweise spiralförmig, verläuft.

2. Koagulator nach Anspruch 1, dadurch gekennzeichnet, daß die heißen Gase als Teilstrom des Abgases der Brennkraftmaschine nahe dieser abgezweigt sind.

3. Koagulator nach Anspruch 1, dadurch gekennzeichnet, daß die heißen Gase von dem Ausgang eines Rußbrenners der Abgasreinigungsanlage abgenommen sind.

4. Koagulator nach einem der Ansprüche 1 - 3, dadurch gekennzeichnet, daß die Isolatorscheibe (13) aus einem Grundkörper (22) und aus mindestens einer auf diesem aufgesinterten Deckplatte (23) mit geringerer axialer Dicke besteht und daß der mindestens eine Heizkanal (30) als Spiralnut (24) auf der der Deckplatte (23) zugekehrten Seitenfläche des Grundkörpers (22) eingebracht ist.

5. Koagulator nach Anspruch 4, dadurch gekennzeichnet, daß die Spiralnut (24) mit einer im Grundkörper (22) radial verlaufenden Einströmöffnung (25) und mit einer im Grundkörper (22) axial verlaufenden Ausströmöffnung (26) in Verbindung steht, die vorzugsweise als Bohrungen (27,29) ausgebildet sind.

6. Koagulator nach Anspruch 5, dadurch gekennzeichnet, daß die Ausströmöffnung (26) durch die Deckplatte (23) hindurchtritt und im Innern des Gehäuses (10) mündet.

7. Koagulator nach einem der Ansprüche 4 - 6, dadurch gekennzeichnet, daß die von der Deckplatte (23) abgekehrte Oberfläche des Grundkörpers (22) mit einer Wärmedämmung (31) belegt ist.

8. Koagulator nach einem der Ansprüche 4 - 6, dadurch gekennzeichnet, daß der Grundkörper (22) auf beiden Seitenflächen mit je einer Spiralnut (24,24′) versehen ist, daß auf jeder Seitenfläche eine Deckplatte (23,23′) aufgesintert ist und daß vorzugsweise die beiden Spiralnuten (24,24′) eine gemeinsame Einströmöffnung (25) aufweisen.

9. Koagulator nach einem der Ansprüche 1 - 8, dadurch gekennzeichnet, daß die Isolatorscheibe (13,13′) randseitig an einem von der inneren Gehäusewand radial wegstehenden Ringsteg (17) verschraubt ist.

10. Koagulator nach Anspruch 9, dadurch gekennzeichnet, daß die Isolatorscheibe (13,13′) axiale Durchtrittsöffnungen (15) aufweist, die über den Umfang gleichmäßig verteilt angeordnet sind und mit gleichartigen Durchtrittsöffnungen (16) in dem Ringsteg (17) des Gehäuses (10) fluchten, und daß durch die paarweisen Durchtrittsöffnungen (15,16) Kopfschrauben (18) hindurchgesteckt sind, die in Gewindelöchern (19) in einem außen auf der Deckplatte (23) aufliegenden Ring (20) verschraubt sind.

11. Koagulator nach Anspruch 10, dadurch gekennzeichnet, daß im Bereich der Schraubverbindungen (18,20) zwischen Ring (20) und Deckplatte (23) und zwischen Axialdurchführung (14) und Elektrode (11) wärmedämmende Dichtungen (21,35) eingelegt sind.

Fig.1

Fig. 2

Fig. 3